# DEMANDE DE BREVET EUROPEEN

(11) **EP 4 109 905 A1**
(43) Date de publication de la demande: **28.12.2022**
(21) Numéro de dépôt: 22178159.4
(22) Date de dépôt: 09.06.2022
(51) Int. Cl.: H04N 21/2343, H04N 21/41, H04N 21/442, H04N 21/443, H04N 21/462, H04N 21/845, H04N 21/2368, H04N 21/439, H04N 21/45, H04N 19/156, H04N 19/44, H04N 21/258

(54) **GESTION DU TÉLÉCHARGEMENT PROGRESSIF ADAPTATIF D'UN CONTENU NUMÉRIQUE EN MODE ÉCONOMISEUR D'ÉCRAN**

(30) Priorité: 24.06.2021 FR 2106732
(71) Demandeur: Orange, 92130 Issy-les-Moulineaux (FR)
(72) Inventeur: MARCHAND, Hervé, 92326 CHATILLON (FR); RIVOALEN, Mathieu, 92326 CHATILLON (FR)
(74) Mandataire: Vidon Brevets & Stratégie

(57) **Abrégé**

L'invention concerne un procédé de gestion du téléchargement progressif adaptatif d'un contenu numérique au sein d'un terminal lecteur de flux multimédia dans un réseau de communication local, ledit terminal lecteur de flux multimédia étant associé à un terminal de restitution dudit contenu numérique. Sur détection (20) d'un état actif d'un mode économiseur d'écran dudit terminal de restitution, un tel procédé de gestion met en œuvre une réduction progressive (24) d'une qualité de restitution vidéo dudit contenu numérique téléchargé, et maintient (22) une qualité de restitution audio dudit contenu.

## Description

### Domaine technique

Le domaine de l'invention est celui des contenus multimédias numériques, à savoir les contenus audio et/ou vidéo numériques, qui peuvent être acheminés vers un terminal lecteur de flux multimédia d'un réseau de communication local, selon une technique dite de téléchargement progressif adaptatif (ou HAS pour l'anglais « HTTP Adaptative Streaming »).

Plus précisément, l'invention concerne l'optimisation des ressources de bande passante consommées par un tel téléchargement de contenu.

### Art antérieur

L'accès à un contenu multimédia, tel que la télévision ou la vidéo à la demande, depuis un réseau de type Internet, est possible aujourd'hui, pour la plupart des terminaux de restitution, notamment lorsqu'ils appartiennent à un réseau de communication local, tel qu'un réseau domestique.

Le terminal émet généralement une requête à destination d'un serveur, en indiquant le contenu choisi et il reçoit en retour un flux de données numériques relatives à ce contenu. Dans le cadre d'un réseau de communication local, une telle requête transite par la passerelle d'accès au réseau, par exemple la passerelle résidentielle.

Le terminal est adapté pour recevoir ces contenus numériques sous forme de données multimédia et pour en faire une restitution. Cette restitution consiste à fournir au niveau du terminal le contenu numérique sous une forme accessible à l'utilisateur. Par exemple, des données reçues correspondant à une vidéo sont généralement décodées, puis restituées au niveau du terminal sous la forme d'un affichage de la vidéo correspondante avec sa bande-son associée.

La diffusion de contenus numériques sur Internet est souvent basée sur des protocoles client-serveur de la famille HTTP (de l'anglais « Hyper Text Transport Protocol »). En particulier, le téléchargement en mode progressif des contenus numériques, aussi appelé streaming, permet de transporter et consommer les données en temps réel, c'est-à-dire que les données numériques sont transmises sur le réseau et restituées par le terminal au fur et à mesure de leur arrivée. Le terminal reçoit et stocke une partie des données numériques dans une mémoire tampon avant de les restituer. Ce mode de distribution est particulièrement utile quand le débit dont dispose l'utilisateur n'est pas garanti pour le transfert en temps réel de la vidéo.

Le téléchargement progressif adaptatif, en anglais HTTP Adaptative Streaming, d'abréviation HAS, permet de surcroît de diffuser et recevoir des données suivant différentes qualités correspondant par exemple à différents débits. Ces différentes qualités sont décrites dans un fichier de paramètres disponible en téléchargement sur un serveur de données, par exemple un serveur de contenus. Quand le terminal client souhaite accéder à un contenu, ce fichier de description permet de sélectionner le bon format pour le contenu à consommer en fonction de la bande passante disponible ou des capacités de stockage et de décodage du terminal client. Ce type de technique permet notamment de tenir compte des variations de bande passante sur la liaison entre le terminal client et le serveur de contenus.

Il existe plusieurs solutions techniques pour faciliter la distribution d'un tel contenu en streaming, comme par exemple les solutions propriétaires Microsoft^{®} Smooth Streaming, Apple^{®} HLS, Adobe^{®} HTTP Dynamic Streaming ou encore la norme MPEG-DASH de l'organisme ISO/IEC qui sera décrite ci-après. Ces méthodes proposent d'adresser au client un ou plusieurs fichiers de description intermédiaires, appelés aussi documents ou manifestes, contenant les adresses des différents segments vidéo aux différentes qualités du contenu multimédia.

Ainsi, la norme MPEG-DASH (pour l'anglais "Dynamic Adaptive Streaming over HTTP", en français « diffusion en flux adaptatif dynamique sur HTTP ») est un standard de format de diffusion audiovisuelle sur Internet. Il se base sur la préparation du contenu en différentes présentations de qualité et débit variables, découpées en segments de courte durée (de l'ordre de quelques secondes), également appelés « chunks ». Chacun de ces segments est rendu disponible individuellement au moyen d'un protocole d'échange. Le protocole principalement ciblé est le protocole HTTP, mais d'autres protocoles (par exemple FTP) peuvent également être utilisés. L'organisation des segments vidéo et les paramètres associés sont publiés dans un manifeste au format XML.

Le principe sous-jacent à cette norme est que le client MPEG-DASH effectue une estimation de la bande passante disponible pour la réception des segments, et, en fonction du remplissage de son tampon de réception, choisit, pour le prochain segment vidéo à charger, une représentation dont le débit :
- assure la meilleure qualité possible,
- et permet un délai de réception compatible avec le rendu ininterrompu du contenu.

Ainsi, pour s'adapter à la variation des conditions réseau, notamment en termes de bande passante, les solutions existantes de téléchargement adaptatif permettent au terminal client de passer d'une version du contenu encodée à un certain débit, à une autre encodée à un autre débit, au cours du téléchargement. En effet, chaque version du contenu est divisée en segments vidéo de même durée. Pour permettre une restitution en continu du contenu sur le terminal, chaque segment doit atteindre le terminal avant son instant programmé de restitution. La qualité perçue associée à un segment augmente avec la taille du segment, exprimée en bits, mais dans le même temps, des segments plus gros requièrent un temps de transmission plus important, et donc présentent un risque accru de ne pas être reçus à temps pour une restitution en continu du contenu.

Le terminal de restitution doit donc trouver un compromis entre la qualité globale du contenu, et sa restitution ininterrompue, en sélectionnant avec soin le prochain segment à télécharger, parmi les différents débits d'encodage proposés. Il existe pour ce faire différents algorithmes de sélection de la qualité du contenu en fonction de la bande passante disponible, qui peuvent présenter des stratégies plus ou moins agressives, ou plus ou moins sécuritaires.

La consommation de contenus numériques en téléchargement progressif adaptatif (HAS) tend à se démocratiser. Elle est notamment utilisée par de nombreux services de streaming (en français, diffusion en mode continu, ou lecture en continu), mais également par certains décodeurs TV, ou set-top-box, qui l'utilisent pour accéder à des contenus délinéarisés, tels que la vidéo à la demande (VOD), la diffusion en différé de programmes télévisuels (Replay), ou encore les offres de type Network PVR (pour « Network Personal Video Recorder », i.e. un service d'enregistrement des contenus numériques, effectué par le fournisseur de contenus lui-même plutôt qu'au domicile de l'utilisateur final).

Dans les foyers, les terminaux permettant d'opérer un tel téléchargement progressif adaptatif de contenus sont également de plus en plus répandus. Ces terminaux, que l'on peut qualifier de terminaux lecteurs de flux multimédia, peuvent intégrer un écran de restitution, comme c'est le cas des téléviseurs connectés (ou en anglais « Smart TV »), ou être couplés à un terminal de restitution (par exemple, une console de jeux vidéo, connectée à un téléviseur).

De plus en plus souvent, ils intègrent une fonction d'économiseur d'écran (en anglais « screen saver »), qui vise à préserver la qualité de l'écran de restitution, en évitant un affichage trop long d'informations statiques sur ce dernier, qui serait susceptible d'entraîner un phénomène de rémanence. De manière classique, lorsque le mode économiseur d'écran est activé, un écran de veille s'affiche, qui peut par exemple projeter à l'utilisateur une série d'images, ou encore l'heure courante, ou encore une animation du logo de la marque du terminal.

La configuration de cette fonction d'économiseur d'écran est réalisée par le fabricant du terminal de restitution, qui programme, d'une part, le type d'écran de veille à afficher, et d'autre part, la durée maximale d'affichage d'informations statiques que l'écran peut supporter, et à partir de laquelle il convient d'activer le mode économiseur d'écran. Cette durée est variable notamment en fonction de la technologie d'affichage d'informations sur l'écran (écran LCD (pour l'anglais « Liquid Crystal Display »), LED (pour l'anglais « Light-Emitting Diodes »), OLED (pour l'anglais « Organic Light-Emitting Diodes ») ...). Elle est choisie par le fabricant de l'écran de restitution. Le plus souvent, le passage à l'état actif du mode économiseur d'écran fait l'objet d'une notification qui peut être détectée par les différentes applications logicielles qui s'exécutent sur le terminal lecteur de flux multimédia.

Cependant, l'affichage de l'écran de veille, lors de l'activation du mode économiseur d'écran, n'entraîne pas la coupure du flux multimédia qui est joué par l'application logicielle active. En effet, de tels terminaux lecteurs de flux multimédia, comme les téléviseurs connectés, sont notamment utilisés dans les environnements domestiques pour des applications de type radio, ou musique (comme Deezer^{®} ou Spotify^{®} par exemple). Il est indispensable que le flux audio téléchargé par ces applications puisse continuer à être restitué à l'utilisateur, sans modification, même lorsque l'écran de restitution passe dans un mode d'économie d'écran.

Cependant, pour les applications qui ne restituent pas uniquement un flux audio, mais également un flux vidéo, les données vidéo qui continuent à être téléchargées par les applications actives n'ont pas d'utilité, car l'écran de veille affiché en mode économiseur d'écran en masque le rendu. Ainsi, lorsqu'un utilisateur lance l'application TV développée par le Demandeur, une page d'accueil s'affiche, appelée DESK, sur laquelle figurent un ensemble d'images statiques, correspondant à différents items d'un menu, comme l'accès à la vidéo à la demande (VOD pour « Video On Demand »), l'accès à la rediffusion de contenus (Replay), l'accès au guide électronique des programmes (EPG pour « Electronic Program Guide »), etc. En plus de ces images statiques, un flux vidéo en temps réel s'affiche en arrière-plan, correspondant à la dernière chaîne TV regardée par l'utilisateur.

L'affichage de ces images statiques rend nécessaire l'activation du mode économiseur d'écran, en cas d'inactivité prolongée de l'utilisateur, afin d'éviter toute détérioration de l'écran. Cependant, quand ce mode économiseur d'écran est activé, l'application TV poursuit le téléchargement du flux multimédia en temps réel correspondant à la dernière chaîne TV regardée par l'utilisateur, alors même que la restitution des images associées est masquée par l'écran de veille choisi par le fabricant du terminal de restitution.

Ceci s'avère problématique, car le téléchargement et la lecture de ce contenu vidéo sont inutilement consommateurs de bande passante sur le réseau de l'utilisateur ; ils consomment également des ressources sur les plateformes de service de l'opérateur qui met à disposition le contenu, et ce, sans aucune utilité.

Il existe donc un besoin d'une technique de gestion de téléchargement de contenu, dans un mode économiseur d'écran, qui ne présente pas ces différents inconvénients de l'art antérieur. Plus précisément, il existe un besoin d'une telle technique qui permette de préserver les ressources et la bande passante, tant de l'utilisateur, que de l'opérateur, lorsque le terminal de restitution de l'utilisateur est en mode économiseur d'écran. Il existe également un besoin d'une telle technique qui offre à l'utilisateur une qualité d'expérience satisfaisante, et notamment une restitution rapide du contenu souhaité, lorsqu'il met fin à sa période d'inactivité.

### Exposé de l'invention

L'invention répond à ce besoin en proposant un procédé de gestion du téléchargement progressif adaptatif d'un contenu numérique au sein d'un terminal lecteur de flux multimédia dans un réseau de communication local. Le terminal lecteur de flux multimédia est associé à un terminal de restitution du contenu numérique. Dans un mode de réalisation, le terminal lecteur de flux multimédia et le terminal de restitution sont intégrés dans un même équipement utilisateur, par exemple un téléviseur connecté (« Smart TV »).

Sur détection d'un état actif d'un mode économiseur d'écran du terminal de restitution, un tel procédé de gestion met en œuvre une réduction progressive d'une qualité de restitution vidéo du contenu numérique téléchargé, mais maintient une qualité de restitution audio du contenu. Ainsi, l'invention repose sur une approche tout à fait nouvelle et inventive de la gestion du téléchargement progressif adaptatif d'un contenu, dans le contexte particulier de l'existence d'une fonction d'économie d'écran sur le terminal de restitution.

En effet, le procédé de gestion selon un mode de réalisation de l'invention propose, en cas d'activation du mode économiseur d'écran du terminal de restitution, de réduire progressivement la qualité du flux vidéo qui est restitué à l'utilisateur. Cette restitution étant masquée par l'écran de veille dont l'affichage a été activée, l'utilisateur ne perçoit pas de dégradation de la qualité de restitution du contenu.

Cependant, cette réduction progressive de la qualité permet de réduire la consommation de bande passante et de ressources, tant pour le réseau de l'utilisateur, que pour les plateformes de service de l'opérateur, ce qui est avantageux.

En outre, le procédé de gestion selon un mode de réalisation de l'invention permet avantageusement de poursuivre le téléchargement du contenu, même s'il se fait dans une qualité dégradée, ce qui permet d'afficher le flux vidéo immédiatement après la disparition de l'écran de veille, lorsque l'utilisateur sort de sa période d'inactivité, en appuyant par exemple sur une touche de la télécommande associée au terminal lecteur de flux multimédia.

Enfin, le procédé de gestion selon un mode de réalisation de l'invention propose de maintenir la qualité de restitution audio du contenu, en dépit de la détection de l'activation du mode économiseur d'écran, ce qui est particulièrement avantageux lorsque le flux multimédia téléchargé est un flux audio uniquement, par exemple pour un streaming audio de musique ou d'une station de radio.

Selon un mode de réalisation, le contenu numérique étant associé à un fichier de description du contenu numérique, comprenant une liste de segments temporels vidéo du contenu associés chacun à plusieurs débits d'encodage du contenu, la réduction progressive d'une qualité de restitution vidéo du contenu numérique téléchargé repose sur un téléchargement de segments temporels vidéo du contenu associés à des débits d'encodage décroissant dans le temps.

Ainsi, la solution de l'invention s'appuie sur les capacités de la technologie HAS. En effet, un contenu diffusé en HAS est proposé au client à différents débits d'encodage. En fonction des conditions réseau, le client HAS embarqué dans le terminal lecteur de flux multimédia (par exemple un téléviseur connecté ou une clef HDMI) adapte en permanence la qualité du flux téléchargé, afin de pouvoir bénéficier de la meilleure qualité de restitution possible, tout en assurant une fluidité de restitution du contenu sur le terminal de restitution (e.g. le téléviseur). Pour ce faire, il procède au téléchargement du segment temporel proposé au débit d'encodage optimal, en fonction des contraintes de bande passante et de ressources du réseau.

Selon l'invention au contraire, dès lors que l'on détecte que le terminal de restitution est passé en mode économiseur d'écran, le terminal lecteur de flux multimédia ne télécharge plus les segments temporels vidéo du contenu au débit d'encodage optimal, mais télécharge des segments temporels à des débits d'encodage de plus en plus réduits, jusqu'à atteindre la qualité de restitution vidéo la plus faible du contenu. Cette décroissance progressive des débits d'encodage des segments temporels téléchargés peut s'opérer par exemple sur une période d'une heure, du débit optimal par rapport aux contraintes de ressources du réseau, jusqu'au débit le plus faible proposé dans le manifeste associé au contenu.

Selon un mode de réalisation, à l'issue d'une période de durée déterminée d'absence d'interaction d'un utilisateur avec le terminal lecteur de flux multimédia et/ou avec le terminal de restitution après détection de l'état actif du mode économiseur d'écran, un tel procédé de gestion met en œuvre une interruption du téléchargement de segments temporels vidéo dudit contenu. Ainsi, il est possible de réduire progressivement la qualité des segments vidéo téléchargés pendant une période de durée choisie, à l'issue de laquelle, si l'utilisateur n'a toujours pas interagi avec le terminal, le téléchargement du flux multimédia est interrompu. On opère ainsi une coupure du flux HDMI, afin d'éviter une consommation inutile des ressources réseau et des ressources des plateformes de service du fournisseur de contenu. Il est important que cette durée soit correctement choisie, et notamment suffisamment longue, pour éviter toute détérioration de la qualité d'expérience de l'utilisateur. En effet, en cas de coupure du flux, l'utilisateur devra faire face à un temps de latence élevé, avant d'accéder à nouveau à la restitution du contenu.

Selon un mode de réalisation, sur détection de l'état actif du mode économiseur d'écran du terminal de restitution, il met également en œuvre une réduction progressive d'un volume sonore de restitution du contenu. De préférence, cette réduction du volume sonore de restitution du flux audio n'est opérée que si le contenu téléchargé est un flux audio et vidéo. Dans le cas où le contenu est un contenu audio seulement, par exemple de la musique en provenance d'une station radio, il est préférable que le passage en mode économie d'écran n'altère pas l'expérience de l'utilisateur.

Selon un mode de réalisation, sur détection d'une interaction de l'utilisateur avec le terminal lecteur de flux multimédia et/ou avec le terminal de restitution du contenu numérique, le mode économiseur d'écran du terminal de restitution passe dans un état inactif et la réduction progressive de qualité de restitution est interrompue. Un tel procédé met alors en œuvre un téléchargement de segments temporels du contenu associés à des débits d'encodage optimisés en fonction d'une contrainte de ressource estimée par le terminal lecteur de flux multimédia en temps réel.

Ainsi, si l'on détecte que l'utilisateur sort de sa période d'inactivité, par exemple en appuyant sur une touche de sa télécommande, on revient au mode de fonctionnement normal, dans lequel l'écran de veille est désactivé, et dans lequel le téléchargement des segments de contenu s'opère selon la technique HAS classique.

L'invention concerne également un produit programme d'ordinateur comprenant des instructions de code de programme pour la mise en œuvre d'un procédé de gestion du téléchargement progressif adaptatif d'un contenu numérique tel que décrit précédemment, lorsqu'il est exécuté par un processeur.

L'invention vise également un support d'enregistrement lisible par un ordinateur sur lequel est enregistré un programme d'ordinateur comprenant des instructions de code de programme pour l'exécution des étapes du procédé de gestion du téléchargement progressif adaptatif d'un contenu numérique selon l'invention tel que décrit ci-dessus.

Un tel support d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une clé USB ou un disque dur.

D'autre part, un tel support d'enregistrement peut être un support transmissible tel qu'un signal électrique ou optique, qui peut être acheminé via un câble électrique ou optique, par radio ou par d'autres moyens, de sorte que le programme d'ordinateur qu'il contient est exécutable à distance. Le programme selon l'invention peut être en particulier téléchargé sur un réseau par exemple le réseau Internet.

Alternativement, le support d'enregistrement peut être un circuit intégré dans lequel le programme est incorporé, le circuit étant adapté pour exécuter ou pour être utilisé dans l'exécution du procédé de contrôle d'affichage précité.

L'invention concerne également un dispositif de gestion du téléchargement progressif adaptatif d'un contenu numérique au sein d'un terminal lecteur de flux multimédia dans un réseau de communication local, le terminal lecteur de flux multimédia étant associé à un terminal de restitution du contenu numérique. Un tel dispositif comprend :
- un module de détection d'un état actif d'un mode économiseur d'écran du terminal de restitution, et
- un module de gestion de téléchargement, configuré pour réduire progressivement une qualité de restitution vidéo du contenu numérique téléchargé et maintenir une qualité de restitution audio du contenu, sur détection de l'état actif du mode économiseur d'écran.

Selon un mode de réalisation, le contenu numérique étant associé à un fichier de description du contenu numérique, comprenant une liste de segments temporels vidéo du contenu associés chacun à plusieurs débits d'encodage du contenu, le module de gestion de téléchargement comprend des moyens d'émission de commandes de téléchargement de segments temporels vidéo du contenu associés à des débits d'encodage décroissant dans le temps.

L'invention concerne encore un téléviseur connecté, comprenant un module lecteur de flux multimédia configuré pour le téléchargement progressif adaptatif d'un contenu numérique, et un écran de restitution du contenu numérique téléchargé. Un tel téléviseur connecté comprend un module de détection d'un état actif d'un mode économiseur d'écran de l'écran de restitution. Sur détection de l'état actif du mode économiseur d'écran, le module lecteur de flux multimédia est configuré pour réduire progressivement une qualité de restitution vidéo du contenu numérique téléchargé et maintenir une qualité de restitution audio du contenu.

Le dispositif de gestion de téléchargement progressif adaptatif de contenu, le téléviseur connecté et le programme d'ordinateur correspondants précités présentent au moins les mêmes avantages que ceux conférés par le procédé de gestion de téléchargement progressif adaptatif de contenu selon la présente invention.

### Présentation des figures

D'autres buts, caractéristiques et avantages de l'invention apparaîtront plus clairement à la lecture de la description suivante, donnée à titre de simple exemple illustratif, et non limitatif, en relation avec les figures, parmi lesquelles :
[Fig 1] présente une architecture de téléchargement progressif basée sur l'utilisation du streaming adaptatif selon un mode de réalisation de l'invention ;
[Fig 2] illustre sous forme d'organigramme les différentes étapes mises en œuvre par le procédé de gestion du téléchargement progressif adaptatif d'un contenu numérique en mode économiseur d'écran selon un mode de réalisation de l'invention ;
[Fig 3] décrit plus en détail le principe de la réduction de la qualité vidéo du contenu dans un contexte de téléchargement HAS, dans le mode de réalisation de la figure 2 ;
[Fig 4] présente une architecture d'un terminal lecteur de flux multimédia en temps réel selon un mode de réalisation de l'invention, par exemple le téléviseur connecté 3 de la figure 1.

### Description détaillée de modes de réalisation de l'invention

Le principe général de l'invention repose, en cas de détection d'un passage d'un écran de restitution d'un flux multimédia en mode économiseur d'écran, sur une réduction progressive de la qualité vidéo du contenu numérique téléchargé en mode de téléchargement progressif adaptatif (HAS) par un terminal lecteur de flux multimédia, tout en maintenant inchangée la qualité du flux audio associé. Cette réduction progressive de la qualité vidéo permet d'optimiser la consommation des ressources réseau, tant pour l'opérateur du réseau de communication étendu, que pour le réseau de communication local, tout en permettant un retour rapide à la restitution du contenu vidéo en cas de sortie du mode économiseur d'écran, et en assurant un maintien de la qualité d'écoute de l'utilisateur pour la partie audio du flux.

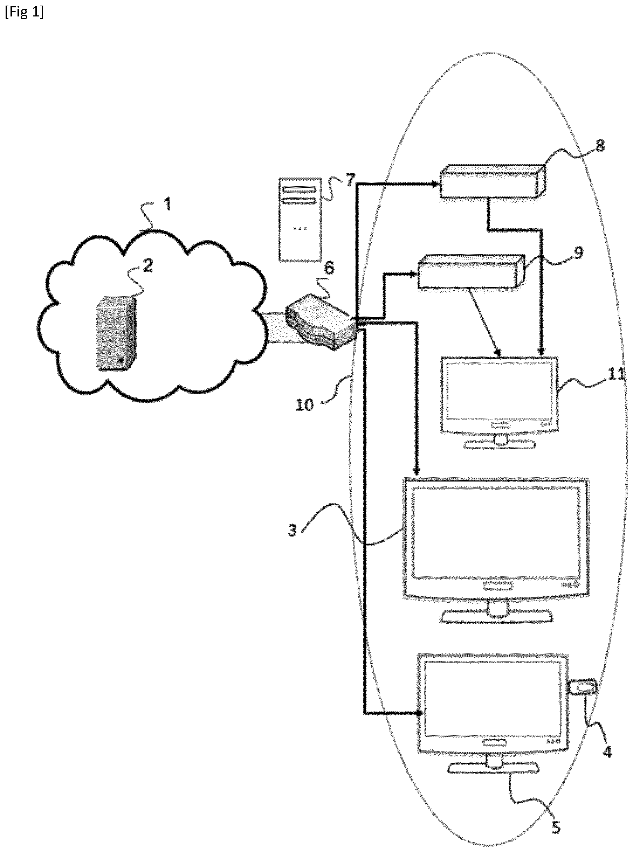

On présente désormais, en relation avec la **figure 1****,** une architecture de téléchargement progressif basée sur l'utilisation du streaming adaptatif selon l'invention.

Le terminal 3, par exemple un téléviseur connecté de type « smart TV », le terminal 4, par exemple une clef HDMI connectée à un téléviseur 5, le terminal 8, par exemple une console de jeux connectée à un écran de restitution 11, le terminal 9, par exemple un décodeur numérique de type « set top box » connecté à un écran de restitution 11, se trouvent dans cet exemple situé dans un réseau local (LAN, 10) piloté par une passerelle domestique 6. Le contexte du réseau local est donné à titre d'exemple et pourrait être transposé aisément à un réseau Internet de type « best effort », un réseau d'entreprise, etc.

Un serveur de contenus numériques 2 se trouve selon cet exemple dans le réseau étendu (WAN, 1) mais il pourrait indifféremment être situé dans le réseau local (LAN, 10), par exemple dans la passerelle domestique 6 ou tout autre équipement capable d'héberger un tel serveur de contenus. Le serveur de contenus 2 reçoit par exemple des chaînes de contenus de télévision numérique en provenance d'un réseau de télévision diffusée, non représenté, et/ou des vidéos à la demande, et les met à disposition des terminaux clients.

Les terminaux client 3, 4, 8 et 9 peuvent entrer en communication avec le serveur de contenus 2 pour recevoir un ou plusieurs contenus (films, documentaires, séquences publicitaires, etc.).

Il est fréquent, dans ce contexte client-serveur, de recourir, pour échanger les données entre les terminaux client 3, 4, 8 et 9 et le serveur 2, à une technique de téléchargement progressif adaptatif, en anglais « adaptive streaming », abrégé en HAS basée sur le protocole HTTP. Ce type de technique permet notamment d'offrir une bonne qualité de contenus à l'utilisateur en tenant compte des variations de bande passante qui peuvent se produire sur la liaison entre le terminal client 3, 4, 8 et 9 et la passerelle de services 6, ou entre cette dernière et le serveur de contenus 2. Classiquement, différentes qualités peuvent être encodées pour le même contenu vidéo d'une chaîne, correspondant par exemple à différents débits. Plus généralement, on parlera de qualité pour se référer à une certaine résolution du contenu numérique (résolution spatiale, temporelle, niveau de qualité associée à la compression vidéo et/ou audio) avec un certain débit. Chaque niveau de qualité est lui-même découpé sur le serveur de contenus en segments temporels (ou « fragments » de contenu, en anglais « chunks », ces trois mots étant utilisés indifféremment dans l'ensemble de ce document). La bande son associée aux segments vidéo peut également être proposée selon un ou plusieurs niveaux de qualité distincts.

La description de ces différentes qualités et de la segmentation temporelle associée, ainsi que les fragments de contenu, sont décrits pour le terminal client et mis à sa disposition via leurs adresses Internet (URI : Universal Ressource Identifier). L'ensemble de ces paramètres (qualités, adresses des fragments, etc.) est en général regroupé dans un fichier de paramètres, dit fichier de description. On notera que ce fichier de paramètres peut être un fichier informatique ou un ensemble d'informations descriptives du contenu, accessible à une certaine adresse.

Les terminaux 3, 4, 8 et 9 possèdent leurs propres caractéristiques en termes de capacité de décodage, d'affichage, etc. Dans un contexte de téléchargement adaptatif progressif, ils peuvent adapter leurs requêtes pour recevoir et décoder le contenu demandé par l'utilisateur à la qualité qui leur correspond au mieux. Dans notre exemple, si les contenus sont disponibles aux débits 512 kb/s (kilobits par seconde) (Résolution 1, ou niveau 1, noté N1), 1024 kb/s (N2), 2048 kb/s (N3) et que le terminal client dispose d'une bande passante de 3000 kb/s, il peut demander le contenu à n'importe quel débit inférieur à cette limite, par exemple 2048 kb/s. De manière générale, on note « Ci@Nj » le contenu numéro i avec la qualité j (par exemple le j-ième niveau Nj de qualité décrit dans le fichier de description).

La passerelle de service 6 est dans cet exemple une passerelle domestique qui assure le routage des données entre le réseau étendu 1 et le réseau local 10, gère les contenus numériques en assurant notamment leur réception en provenance du réseau et leur décodage grâce aux décodeurs que l'on suppose ici intégrés à la passerelle 6 ou aux terminaux clients 3, 4, 8 et 9.

Dans cet exemple, pour visualiser un contenu, le terminal 3, 4, 8 ou 9 interroge tout d'abord la passerelle de service 6 pour obtenir une adresse du document de description 7 du contenu (par exemple, C1) souhaité. La passerelle de service 6 répond en fournissant au terminal l'adresse du fichier de description 7. Dans la suite, on supposera que ce fichier est un fichier de type manifest selon la norme MPEG-DASH (noté « C.mpd ») et on se réfèrera indifféremment, selon le contexte, à l'expression « fichier de description » ou « manifest ».

Alternativement, ce fichier peut être récupéré directement auprès d'un serveur Internet local ou externe au réseau local, ou se trouver déjà sur la passerelle de service ou sur le terminal au moment de la requête.

A titre d'exemple, un fichier manifest (MPD) conforme à la norme MPEG-DASH peut comporter la description de contenus disponibles dans trois qualités différentes (N1 = 512 kb/s, N2 = 1024 kb/s, N3 = 2048 kb/s). Un tel fichier manifest décrit des contenus numériques dans une syntaxe XML (de l'Anglais « eXtended Markup Language»), comprenant une liste de contenus sous forme de fragments classiquement décrits entre une balise ouvrante (<SegmentList>) et une balise fermante (</SegmentList>). La découpe en fragments permet notamment de s'adapter finement aux fluctuations de la bande passante. Chaque fragment correspond à une certaine durée (champ « duration ») avec plusieurs niveaux de qualité vidéo et permet de générer leurs adresses (URL - Uniform Resource Locator). Cette génération est faite à l'aide d'éléments « BaseURL » (« HTTP://server.com») qui indiquent l'adresse du serveur de contenus et « SegmentURL » qui liste les parties complémentaires des adresses des différents fragments :
- « C1_512kb_1.mp4 » pour le premier fragment vidéo du contenu « C1 » à 512 kilobits par seconde (« kb ») au format MPEG-4 (« mp4 »),
- « C1_512kb_2.mp4 » pour le second fragment,
- etc.

Un tel fichier manifest comprend également une description de la partie audio du contenu, également découpée sous forme de fragments, avec leur adresse correspondante.

Une fois qu'elle dispose des adresses de fragments correspondant au contenu souhaité, la passerelle de service 6 procède à l'obtention des fragments via un téléchargement à ces adresses. On notera que ce téléchargement s'opère ici, traditionnellement, au travers d'une URL HTTP, mais pourrait également s'opérer au travers d'une adresse universelle (URI) décrivant un autre protocole (dvb://monsegmentdecontenu par exemple).

A titre d'exemple, on s'intéresse dans la suite de cette description au téléviseur connecté 3, dont on suppose qu'il est utilisé pour accéder à des programmes télévisuels, par l'intermédiaire par exemple de l'application TV du Demandeur. La description qui suit peut bien sûr être transposée à l'un quelconque des autres terminaux lecteurs de flux multimédia 4, 8 et 9 de la figure 1.

On suppose que l'utilisateur a donc lancé l'application TV du Demandeur sur le téléviseur connecté 3, qui affiche donc sur son écran une page d'accueil, appelée DESK, sur laquelle figurent un ensemble d'images statiques correspondant aux boutons ou liens d'accès aux items d'un menu (accès à la VOD, accès au Replay, guide électronique des programmes...). En outre, en arrière-plan, est affiché un flux vidéo correspondant par exemple à la dernière chaîne télévisuelle regardée en direct par l'utilisateur. Par la suite, on désigne ce programme télévisuel sous le nom de contenu C1.

Un tel contenu C1 est décrit dans un fichier manifeste 7.

De manière classique, le téléviseur connecté 3 présente une fonction économiseur d'écran, conçue par le fabricant pour éviter toute détérioration de l'écran en cas d'affichage prolongé d'une ou plusieurs images statiques. Cette fonction est connue, et ne sera donc pas décrite ici plus en détail. Elle est paramétrée par le constructeur du téléviseur connecté 3, qui décide, en fonction notamment de la technologie de l'écran (LED, LCD, OLED...), la durée maximale autorisée d'affichage sur l'écran d'images statiques, au-delà de laquelle il convient d'activer le mode économiseur d'écran, pour préserver ce dernier.

Si, après lancement de l'application TV du Demandeur, l'utilisateur n'entreprend plus d'action (pas de sélection d'un programme en direct ou d'un contenu en différé par exemple), et que la page d'accueil DESK reste donc affichée pendant un certain temps, les images statiques qu'elle contient sont susceptibles, à terme, de détériorer l'écran du téléviseur connecté 3. Au bout d'une période d'inactivité prolongée de l'utilisateur, par exemple de 30 minutes, le téléviseur connecté 3 active donc le mode économiseur d'écran. On notera qu'il existe différentes techniques permettant de détecter l'absence d'action de l'utilisateur, qui ne font pas partie de la présente invention, et ne seront donc pas décrites ici plus en détail. Le choix du mode de détection de l'inactivité prolongée de l'utilisateur relève du fabricant du téléviseur connecté 3.

A l'issue de la durée maximale configurée par le fabricant, le mode économiseur d'écran est donc activé, qui consiste à afficher sur l'écran du téléviseur connecté 3, un écran de veille conçu par le fabricant, et éventuellement paramétrable par l'utilisateur. Un tel écran de veille affiche des images simples dynamiques, par exemple l'heure courante, un logo en mouvement du fabricant, ou encore une succession d'images ou de photographies de paysages.

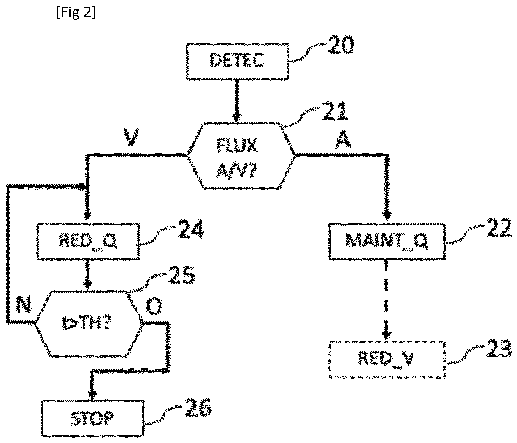

Comme illustré par la **figure 2****,** l'activation du mode économiseur d'écran peut être assorti d'une notification, qui peut être détectée, au cours d'une étape DETEC 20, par les applications logicielles en cours d'exécution sur le téléviseur connecté 3.

Au cours d'une étape référencée 21, ces applications logicielles (par exemple l'application TV du Demandeur) analysent la nature du flux multimédia en cours de téléchargement HAS depuis le serveur 2.

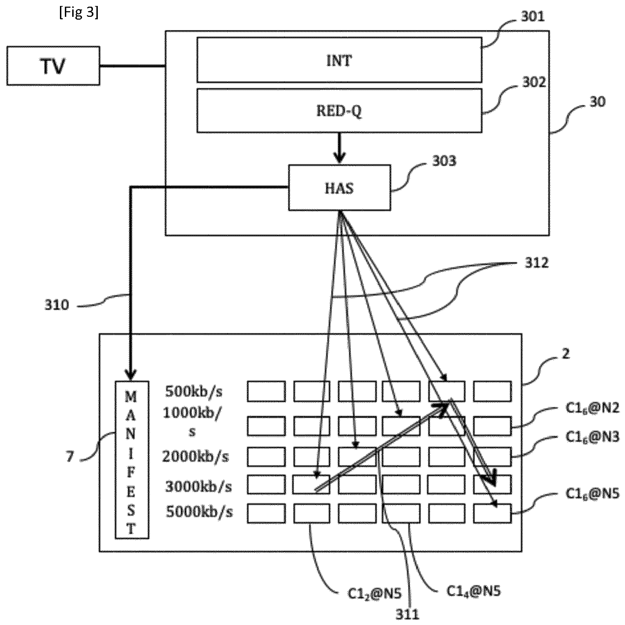

Comme illustré par la partie gauche de l'organigramme de la **figure 2****,** si ce flux correspond à un contenu vidéo V, l'application logicielle entreprend, au cours d'une étape référencée 24 RED_Q, de réduire progressivement la qualité du contenu vidéo téléchargé, selon un principe qui sera décrit plus en détail en relation avec la **figure 3****.** Cette réduction progressive de la qualité du flux vidéo téléchargé s'opère pendant une durée déterminée TH, à condition que l'utilisateur reste inactif, et donc que le mode économiseur d'écran reste activé sur le téléviseur connecté 3. A l'issue de cette période de durée TH, évaluée au cours de l'étape 25, le téléchargement progressif adaptatif du contenu C1 est interrompu au cours d'une étape référencée STOP 26.

Comme illustré par la partie droite de l'organigramme de la **figure 2****,** si ce flux correspond à un contenu audio A, ou comprend un flux audio (par exemple une bande-son associée à un contenu vidéo V), l'application logicielle maintient (étape 22 MAINT_Q) la qualité du flux audio téléchargé, pendant toute la durée d'activation du mode économiseur d'écran. En variante, illustrée en traits pointillés sur la figure 2, la qualité du flux audio A est maintenue, mais le volume sonore de restitution du flux audio A est réduit progressivement au cours d'une étape RED-V 23, par exemple jusqu'à la fin de la période de durée TH. Cette variante est notamment intéressante quand le flux audio A correspond à la bande-son d'un flux vidéo V.

On présente désormais plus en détail, en relation avec la **figure 3****,** le principe de réduction progressive de la qualité du flux vidéo opérée au cours de l'étape RED_Q 24 de la **figure 2****.**

Le terminal lecteur de flux multimédia en temps réel 30 est connecté à un écran de restitution TV : par exemple, la clef HDMI 4 de la figure 1 est connectée par l'intermédiaire d'une liaison HDMI à un écran de téléviseur 5, ou le terminal lecteur de flux multimédia 30 et l'écran de restitution TV sont intégrés dans un même équipement, tel que le téléviseur connecté 3. Le terminal lecteur de flux multimédia en temps réel 30 comprend un module INT 301 d'interface avec l'écran de restitution TV, un module RED_Q 302 de réduction progressive de la qualité d'un contenu téléchargé, et un module client HAS 303.

Un serveur de contenu HAS 2 expose une vidéo C1 sous forme de « chunks » C1ᵢ@Nj encodés à différents débits d'encodage Nj, où l'indice i désigne un identifiant temporel du « chunk » C1ᵢ@Nj. Selon l'art antérieur, un module client HAS est chargé de venir récupérer ses « chunks » auprès du serveur de contenu HAS 2 en choisissant la qualité vidéo Nj en fonction de la ressource réseau disponible. On ne décrit pas ici plus en détail la façon dont le module client HAS choisit le débit d'encodage du prochain fragment vidéo à télécharger : il existe en effet de nombreux algorithmes permettant d'opérer ce choix, dont les stratégies sont plus ou moins sécuritaires ou agressives. On rappelle cependant que, le plus souvent, le principe général de tels algorithmes repose sur le téléchargement d'un premier fragment au débit d'encodage le plus faible proposé dans le manifeste, et sur l'évaluation du temps de récupération de ce premier fragment. Sur cette base, le module client HAS évalue si, en fonction de la taille du fragment et du temps mis pour le récupérer, les conditions réseau permettent de télécharger le fragment suivant à un débit d'encodage plus élevé. Certains algorithmes reposent sur une augmentation progressive du niveau de qualité des fragments de contenu téléchargés ; d'autres proposent des approches plus risquées, avec des sauts dans les niveaux des débits d'encodage des fragments successifs.

Dans le cas classique, si un « chunk » vidéo dure 3 secondes, la récupération du « chunk » par le module client HAS ne doit pas excéder 3 secondes, afin de permettre une restitution sans interruption du contenu par le terminal 30. Il convient donc pour le module client HAS d'opérer le meilleur compromis entre une qualité de restitution, et donc un débit d'encodage, aussi élevés que possible, et le temps de téléchargement du fragment, qui doit être suffisamment faible pour permettre une restitution en continu sur l'écran de restitution TV.

Dans le mode de réalisation illustré en **figure 3****,** en revanche, le module client HAS 303 peut ne pas commander le téléchargement du fragment au débit d'encodage optimal, afin d'optimiser la consommation des ressources réseau, dans le cas où le mode économiseur d'écran de l'écran de restitution TV a été activé.

Au cours d'une étape référencée 310, le module HAS 303 récupère le fichier manifest 7 afin de découvrir les fragments disponibles du contenu vidéo C1, et les différentes qualités vidéo Nj associées. Dans l'exemple de la **figure 3**, le contenu C1 est par exemple proposé sous forme de fragments de durée 3s, avec un premier débit d'encodage N1 = 500 kb/s, un deuxième débit d'encodage N2 = 1000 kb/s, un troisième débit d'encodage N3 = 2000 kb/s, etc.

Dans un mode de fonctionnement normal, non illustré sur la **figure 3****,** le module HAS 303 opère le téléchargement par exemple, des fragments successifs C1₁@N1 (soit le premier fragment temporel à un débit d'encodage de 500 kb/s), puis C1₂@N3 (soit le deuxième fragment temporel à un débit d'encodage de 2000 kb/s), puis C1₃@N3 (soit le troisième fragment temporel à un débit d'encodage de 2000 kb/s), ...

Les différents fragments téléchargés par le module client HAS 303 sont transmis au module d'interface INT 301 pour leur restitution à l'utilisateur sur l'écran de restitution TV (par exemple l'écran du téléviseur connecté 3).

L'algorithme mis en œuvre par le module client HAS 303 pour déterminer quel fragment à quel débit d'encodage doit être téléchargé en mode de fonctionnement normal (c'est-à-dire en dehors des périodes où il est piloté par le module RED_Q 302 de réduction progressive de la qualité) peut être l'un des algorithmes déjà existants de l'art antérieur. Cet algorithme ne sera donc pas décrit ici plus en détail.

En parallèle, conformément à la **figure 3**, le module INT 301 surveille l'activation du mode économiseur d'écran de l'écran de restitution TV, et reçoit par exemple, une notification d'activation ou de désactivation de l'affichage de l'écran de veille sur l'écran de restitution TV. Il transmet ces informations au module RED_Q 302.

A réception d'une information d'activation du mode économiseur d'écran, le module RED_Q 302 initie un compteur, ou « timer », par exemple d'une durée TH de deux ou trois heures. En parallèle, le module RED_Q 302 adresse une commande au module client HAS 303, afin de forcer ce dernier à réduire progressivement la qualité des fragments temporels de contenu vidéo téléchargés, afin de réduire la consommation des ressources réseau.

Ainsi, comme illustré sur la **figure 3****,** le module client HAS 303 va télécharger successivement (312) les fragments C1₂@N4, C1₃@N3, C1₄@N2 et C1₅@N1, pour réduire la qualité de restitution du contenu C1, comme illustré par la flèche référencée 311, jusqu'à la qualité la plus faible proposée dans le manifeste 7, correspondant à un débit de 500 kb/s.

En pratique, la réduction 311 des débits d'encodage des fragments temporels n'est pas aussi rapide, mais s'étale dans le temps, par exemple sur une période d'une heure. La **figure 3** correspond donc à une illustration simplifiée de ce principe, permettant de l'appréhender visuellement. Par exemple, le module client HAS 303 pilote le téléchargement de fragments temporels successifs au niveau de qualité N4 pendant une durée de quinze minutes, puis abaisse ce niveau en téléchargeant des fragments temporels au niveau de qualité N3 pendant le quart d'heure qui suit, et ainsi de suite, jusqu'à atteindre le niveau de qualité N1 le plus faible prévu dans le manifeste 7, au bout de la durée TH.

Si, à l'issue de cette durée TH (une heure par exemple), aucune nouvelle interaction de l'utilisateur n'a été détectée, et que le mode économiseur d'écran reste donc actif, le module RED_Q 302 adresse au module client HAS 303 une commande d'interruption du téléchargement du contenu C1, qui est exécutée : la consommation inutile des ressources réseau cesse alors.

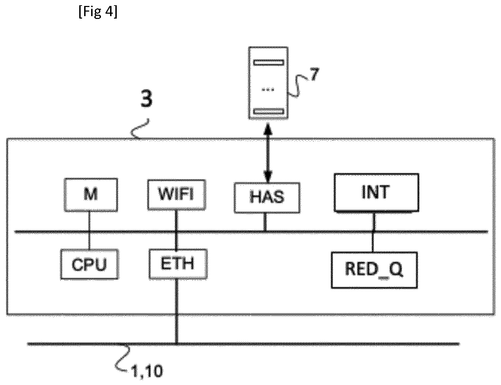

Si, en revanche, à tout moment au cours de cette période de réduction de qualité du flux vidéo, l'utilisateur manifeste sa présence, par exemple en actionnant la télécommande du téléviseur connecté 3, ce dernier désactive donc le mode économiseur d'écran. Ce changement d'état est détecté par le module d'interface INT 301, qui en informe le module RED_Q 302. L'affichage du flux vidéo C1 n'est donc plus masqué par l'écran de veille, et il est important de pouvoir reprendre rapidement une restitution de qualité, pour le confort visuel de l'utilisateur. Le module RED_Q 302 adresse au module client HAS 303 une commande de retour à la normale. Le module client HAS 303 détermine alors, en fonction des conditions réseau, le débit optimal de fragment temporel auquel il peut prétendre, et lance le téléchargement du prochain fragment à ce débit optimal : dans l'exemple de la **figure 3****,** le module client HAS 303 télécharge alors le fragment temporel C1₆@N5. La **figure 4** représente une architecture d'un terminal lecteur de flux multimédia en temps réel selon un mode de réalisation de l'invention, par exemple le téléviseur connecté 3 de la **figure 1****.**

Il comprend, classiquement, des mémoires M associées à un processeur CPU. Les mémoires peuvent être de type ROM (de l'anglais « *Read Only Memory »*) ou RAM (de l'anglais « *Random Access Memory »*) ou encore Flash. Le téléviseur connecté 3 communique avec le réseau local 10 et le réseau Internet étendu 1 via le module WIFI ou le module ethernet ETH. Le téléviseur connecté 3 comprend en outre un module de téléchargement progressif adaptatif HAS apte à demander un téléchargement progressif de l'un des contenus à l'une des qualités proposées dans un fichier de description 7. Ce fichier de description 7 peut être enregistré par exemple dans les mémoires M du téléviseur connecté 3 ou se trouver à l'extérieur.

Le téléviseur connecté 3 comprend également un module de réduction progressive de la qualité d'un contenu RED_Q, qui pilote le module de téléchargement progressif adaptatif HAS, afin de forcer ce dernier à demander un téléchargement progressif du contenu à une qualité, proposée dans le fichier de description 7, inférieure à la qualité optimale à laquelle il pourrait prétendre, dans le cas où le mode économiseur d'écran a été activé.

Le téléviseur connecté 3 selon l'invention peut aussi contenir d'autres modules comme un disque dur non représenté pour le stockage des fragments vidéo, un module de contrôle d'accès aux contenus, un module de traitement des commandes reçues d'une télécommande, etc.

Le téléviseur connecté 3 intègre également un module INT de gestion de l'interface avec l'écran de restitution, par lequel il obtient notamment des informations sur l'activation ou la désactivation du mode économiseur d'écran, et donc l'affichage de l'écran de veille associé.

On notera que le terme module peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en œuvre une fonction ou un ensemble de fonctions telles que décrites pour les modules concernés. De la même manière, un composant matériel correspond à tout élément d'un ensemble matériel (ou hardware) apte à mettre en œuvre une fonction ou un ensemble de fonctions pour le module concerné (circuit intégré, carte à puce, carte à mémoire, etc.).

Plus généralement, un tel téléviseur connecté 3 comprend une mémoire vive (par exemple une mémoire RAM), une unité de traitement équipée par exemple d'un processeur CPU, et pilotée par un programme d'ordinateur, représentatif du module de gestion du téléchargement progressif adaptatif HAS, stocké dans une mémoire morte (par exemple une mémoire ROM ou un disque dur). A l'initialisation, les instructions de code du programme d'ordinateur sont par exemple chargées dans la mémoire vive avant d'être exécutées par le processeur CPU de l'unité de traitement. La mémoire vive contient notamment le fichier de description manifest 7. Le processeur de l'unité de traitement pilote la détection de l'activation du mode économiseur d'écran, l'analyse des composantes audio et/ou vidéo du contenu téléchargé, la réduction progressive de la qualité du contenu vidéo téléchargé, au travers du choix des segments temporels et des débits d'encodage associés à télécharger, le maintien de la qualité du contenu audio téléchargé et l'émission de commandes correspondantes vers le module client HAS.

La **figure 4** illustre seulement une manière particulière, parmi plusieurs possibles, de réaliser le téléviseur connecté 3, afin qu'il effectue les étapes du procédé détaillé ci-avant, en relation avec les **figures 2** **et** **3** (dans l'un quelconque des différents modes de réalisation, ou dans une combinaison de ces modes de réalisation). En effet, ces étapes peuvent être réalisées indifféremment sur une machine de calcul reprogrammable (un ordinateur PC, un processeur DSP ou un microcontrôleur) exécutant un programme comprenant une séquence d'instructions, ou sur une machine de calcul dédiée (par exemple un ensemble de portes logiques comme un FPGA ou un ASIC, ou tout autre module matériel).

Le terminal illustré sur la figure 4 peut plus généralement correspondre à tout terminal lecteur de flux multimédia apte à télécharger un flux multimédia en HAS, tel qu'une console de jeux, une clef HDMI (par exemple la Clé TV^{®} d'Orange ou la Chromecast^{®} de Google^{®}), ou un décodeur numérique de type set-top-box.

## Revendications

1. Procédé de gestion du téléchargement progressif adaptatif d'un contenu numérique au sein d'un terminal lecteur de flux multimédia (30; 3, 4, 8, 9) dans un réseau de communication local, ledit terminal lecteur de flux multimédia étant associé à un terminal de restitution (3, 5, 11) dudit contenu numérique,
**caractérisé en ce que**, sur détection (20) d'un état actif d'un mode économiseur d'écran dudit terminal de restitution, il met en œuvre une réduction progressive (24) d'une qualité de restitution vidéo dudit contenu numérique téléchargé, et maintient (22) une qualité de restitution audio dudit contenu.

2. Procédé de gestion selon la revendication 1, **caractérisé en ce que** ledit contenu numérique étant associé à un fichier de description (7) dudit contenu numérique, comprenant une liste de segments temporels vidéo dudit contenu associés chacun à plusieurs débits d'encodage dudit contenu, ladite réduction progressive (24) d'une qualité de restitution vidéo dudit contenu numérique téléchargé repose sur un téléchargement de segments temporels vidéo dudit contenu associés à des débits d'encodage décroissant dans le temps.

3. Procédé de gestion selon la revendication 2, **caractérisé en ce qu'**à l'issue d'une période de durée déterminée d'absence d'interaction d'un utilisateur avec ledit terminal lecteur de flux multimédia et/ou avec ledit terminal de restitution après détection dudit état actif du mode économiseur d'écran, il met en œuvre une interruption (26) dudit téléchargement de segments temporels vidéo dudit contenu.

4. Procédé de gestion selon l'une quelconque des revendications 1 à 3, **caractérisé en ce que**, sur détection dudit état actif du mode économiseur d'écran dudit terminal de restitution, il met également en œuvre une réduction progressive (23) d'un volume sonore de restitution dudit contenu.

5. Procédé de gestion selon l'une quelconque des revendications 1 et 2, **caractérisé en ce que** sur détection d'une interaction dudit utilisateur avec ledit terminal lecteur de flux multimédia en temps réel et/ou avec ledit terminal de restitution dudit contenu numérique, le mode économiseur d'écran dudit terminal de restitution passe dans un état inactif et ladite réduction progressive de qualité de restitution est interrompue,
**et en ce que** ledit procédé met en œuvre un téléchargement de segments temporels dudit contenu associés à des débits d'encodage optimisés en fonction d'une contrainte de ressource estimée par ledit terminal lecteur de flux multimédia en temps réel.

6. Produit programme d'ordinateur comprenant des instructions de code de programme pour la mise en œuvre d'un procédé de gestion du téléchargement progressif adaptatif d'un contenu numérique selon l'une quelconque des revendications 1 à 5, lorsqu'il est exécuté par un processeur.

7. Dispositif (30) de gestion du téléchargement progressif adaptatif d'un contenu numérique au sein d'un terminal lecteur de flux multimédia dans un réseau de communication local, ledit terminal lecteur de flux multimédia étant associé à un terminal de restitution dudit contenu numérique,
**caractérisé en ce qu'**il comprend :
- un module de détection (301) d'un état actif d'un mode économiseur d'écran dudit terminal de restitution, et
- un module de gestion de téléchargement (302, 303), configuré pour réduire progressivement une qualité de restitution vidéo dudit contenu numérique téléchargé et maintenir une qualité de restitution audio dudit contenu, sur détection dudit état actif du mode économiseur d'écran.

8. Dispositif de gestion selon la revendication 7, **caractérisé en ce que**, ledit contenu numérique étant associé à un fichier de description dudit contenu numérique, comprenant une liste de segments temporels vidéo dudit contenu associés chacun à plusieurs débits d'encodage dudit contenu, ledit module de gestion de téléchargement comprend des moyens d'émission de commandes de téléchargement de segments temporels vidéo dudit contenu associés à des débits d'encodage décroissant dans le temps.

9. Téléviseur connecté (3), comprenant un module lecteur de flux multimédia configuré pour le téléchargement progressif adaptatif d'un contenu numérique, et un écran de restitution dudit contenu numérique téléchargé, **caractérisé en ce qu'**il comprend un module de détection d'un état actif d'un mode économiseur d'écran dudit écran de restitution, **et en ce que**, sur détection dudit état actif du mode économiseur d'écran, ledit module lecteur de flux multimédia est configuré pour réduire progressivement une qualité de restitution vidéo dudit contenu numérique téléchargé et maintenir une qualité de restitution audio dudit contenu.
